# EUROPEAN PATENT SPECIFICATION

(11) **EP 1 842 613 B1**
(45) Date of publication and mention of the grant of the patent: **05.12.2012**
(21) Application number: 07105476.1
(22) Date of filing: 02.04.2007
(51) Int. Cl.: B23D 47/02, B27B 5/16

(54) **A flip over saw**
Umschwenkbare Säge
Scie convertible

(30) Priority: 05.04.2006 GB 0606846
(43) Date of publication of application: 10.10.2007
(60) Divisional application: 08103033.0
(73) Proprietor: Black & Decker, Inc., Newark, DE 19711 (US)
(72) Inventor: Bettacchini, Marcello, 06074 PERUGIA (IT)
(74) Representative: Bell, Ian Stephen

(56) References cited:
- EP-A- 1 614 493
- EP-A1- 0 242 733
- EP-A1- 0 502 350
- DE-A1- 4 323 640
- DE-U1- 8 900 108

## Description

The present invention relates to a flip over saw according to the preamble of claim 1. Such a saw is known from DE 4 323 640 A1.

A flip over saw is a saw which is capable of acting as either a chop saw (or a saw having a chopping function) or a table saw.

Such a saw typically comprises a frame upon which is pivotally mounted a support table. Rotatably mounted within the support table is a circular table. The support table and the circular table are substantially flush with each other. The circular table comprises a slot which passes through the circular table, the slot extending from the centre of the table, radially outwards to the periphery.

A saw unit is pivotally mounted on one side of the round table in a peripheral region of the round table. The saw unit comprises a motor which rotatingly drives a drive spindle on which is rigidly mounted a circular saw blade. The axis of pivot of the saw unit relative to the circular table is parallel to that of the longitudinal axis of the drive spindle. The pivotal movement of the saw unit relative to the circular table enables the saw to perform a chopping function. The saw unit can pivot between two positions, a first position where it is located away from the circular table and a second position where it is adjacent to the circular table. When the saw unit is in its second position, the saw blade passes through the slot formed in the circular table and extends through to the opposite side of the circular table.

The support table is capable of rotating through 180 degrees between two positions. When the support table is in its first position, the support table is horizontal and the saw unit is located above the support table and the circular table. When the support table is in its first position, the saw is intended to be used as a chop saw. A work piece is placed on the circular table and the saw unit is pivoted between its two positions to cut the work piece. Rotation of the circular table within the support table enables the saw to also perform mitre cuts.

When the support table is in its second position, the support table is again horizontal. However, the saw unit is located below the support table and the circular table. When the support table is in this second position, the saw is intended to be used as a table saw. In order for the saw to be able to be used as a table saw, the saw unit is locked in its second position with the blade passing through the slot and extending through to the opposite side of the table. A work piece is slid across the upper side of the circular and support tables, the work piece being cut by the protruding saw blade, which passes through the slot formed in the circular table.

DE1628992 describes such a flip over saw.

EP0502350 provides an improvement over DE1628992 by providing an extension arm to the circular table, the radial slot formed within circular table extending along the length of the extension arm.

The addition of an extension arm to other types of saw is known. EP0242733 shows a sliding compound mitre saw. The sliding compound mitre saw disclosed in EP0242733 has a chopping function which enables it to perform simple chop cuts, mitre cuts, bevel cuts or a combination of these. The chopping function can also be utilised with the sliding function of the saw. The saw comprises a rotatable table mounted within a base and which has an extension arm which extends forward of the rotatable table. A radial slot extends across the rotatable table from its centre radially outwardly to its periphery and then along the extension arm. However, the extension arm in these types of saw typically extends beyond the base. Therefore, all the support for the extension arm is provided through its base where it connects to the rotatable table. Furthermore, the radial slot is only accessible from the top side of the rotatable table and the extension arm and the base can not be flipped over. As such, the saw disclosed in EP242733 can provide a chopping function. However, it is not able to act as a table saw.

However, the problem with flip over saw disclosed in EP0502350 is that the support table has to be located below the extension arm in order to provide the extension arm with support. The reason that the extension arm requires support is that the thickness of the extension arm is the same as that of the circular table, namely, relatively thin. As such, unless it is supported, it is prone to bending.

In order for the flip over saw to be used as a table saw, the saw blade has pass through both the circular and support tables in order to pass to the other side. This results in a second slot being required which is formed through the support table in the region where it supports the extension arm. The flip over saw can then be used as a table saw when the saw blade is able to pass through the slot in the extension arm and the slot in the support table, allowing it to extend to the other side of the support table. This requires that the slot in the extension arm and the slot formed in the support table having to be aligned in order for flip over saw to be used as a table saw.

When the saw is being used to perform chopping functions, in order to provide mitre cuts, the slot through the extension arm ceases to be aligned with the slot through the support table. As such, the periphery of the saw blade can only extend into the slot in the extension arm up to a maximum depth of the thickness of the extension arm, or the cutting edge of the blade would engage with the surface of the support table causing damage to the saw. As a thickness of the extension arm is relatively small, only a tiny portion of the edge saw blade can enter the slot. As such, if the saw unit could only perform a chopping function, it would only be able to cut narrow work pieces. Because such a saw needs to be able to cut a reasonably large work piece, it has been designed so that the saw blade needs to move along the extension slot of the extension arm. This is achieved by slidably mounting the saw unit on the circular table in order to enable the saw blade to be dragged along the slot in order to provide a longer cut. This requires an additional sliding mechanisms which adds costs and complexity.

Furthermore, additional locking mechanisms are required to prevent the saw from engaging the support table through the slot in the extension arm when it is being used to perform mitre cuts (when the two slots are not aligned) whilst allowing the saw blade to pass through both of the aligned slots of the extension arm and support table when the saw table is to be used as a table saw. This again adds further costs and complexity.

The present invention aims to provide a flip over table comprising a circular table with an extension arm but which is of a simplified design.

US5787779, EP1623802 and EP1623801 also disclose various designs of flip over saws.

According to the present invention, there is provided a flip over saw comprising the features of claim 1.

The use of an extension arm on a flip over saw enables a round table having a smaller diameter to be utilised. This results in a round table which is much easier to support within the support table, resulting in it being more stable during the operation of the saw. The stability of the round table within the support table is important because the saw unit is mounted directly onto the round table. The saw unit can have a large mass and the resultant pivotal movement, when the saw is used to perform chop cuts, during the operation of the saw, can place large stresses onto the mounting mechanism of the round table. Improved stability due to the smaller round table reduces the impact of these stresses. Furthermore, by reducing the size of the round table, the size of the support table can be reduced resulting in an overall more compact design.

As the aperture in the support table extends to all the angular positions where the slot in the extension and round table can be located, the saw blade can pass through the slot in any of these angular positions without the cutting edge of the blade being capable engaging the support table. This ensures the safe operation of the saw. It is avoids the need for any alignment to take place between two or more slots before the saw can be used as a table saw.

When the saw is being used to perform chopping functions, in order to provide mitre cuts, the periphery of the saw blade can also extend fully through the slot in the extension and round table. This enables the saw to be able to cut a reasonably large work pieces without having to slidably mount the saw unit on the circular table. This avoids the additional sliding mechanisms required in the prior art design and thus reduces costs and complexity.

Ideally, the round table and extension are both being completely surrounded by the support table.

Preferably, the periphery of the round table engages with at least a part of the edge of the aperture to rotatably support the round table within the aperture.

Preferably, the outer peripheral edge of the extension engages with the support table to provide support for the extension and round table within the support table. This provides additional support to the extension arm, which in turn supports the round table. During use, pressure is applied to the extension arm due to the cutting of a work piece and due to the pressure applied by the operator during the use of the saw. By supportingly engaging the end of the extension, further rigidly of the extension and round table relative to the support table is gained.

In one construction the peripheral edge of the extension can engage with the support table via at least one plastic insert rigidly connected to either the peripheral edge or the support table, and slideably engaged with the other. Ideally, the at least one plastic insert rigidly connected to the support table and comprises a groove in which the peripheral edge of the extension locates.

It can be desirable for the side regions of the extension to be able of overlapping the support table in certain angular positions. This provides further support when the extension and round table have been rotated towards one their extreme angular positions.

An embodiment of the present invention will now be described with reference to the accompanying drawings of which:
Figure 1 shows a side view of the flip over saw when it is configured to perform a chopping function, according to the present invention;
Figure 2 shows a perspective view of the flip over saw when it is configured to perform a chopping function, according to the present invention;
Figure 3 shows a side view of the flip over saw, in the opposite direction to that of Figure 1, when it is configured to perform a chopping function, according to the present invention;
Figure 4 shows a close up front perspective view of the flip over saw showing the metal cast;
Figure 5 shows the circular table together with its extension in a first position relative to the square table;
Figure 6 shows the circular table together with its extension located in a second pivoted position relative to the position shown in Figure 5;
Figure 7 shows the circular table together with its extension located within the square table from the opposite side (underside) to that shown in Figures 5 and 6;

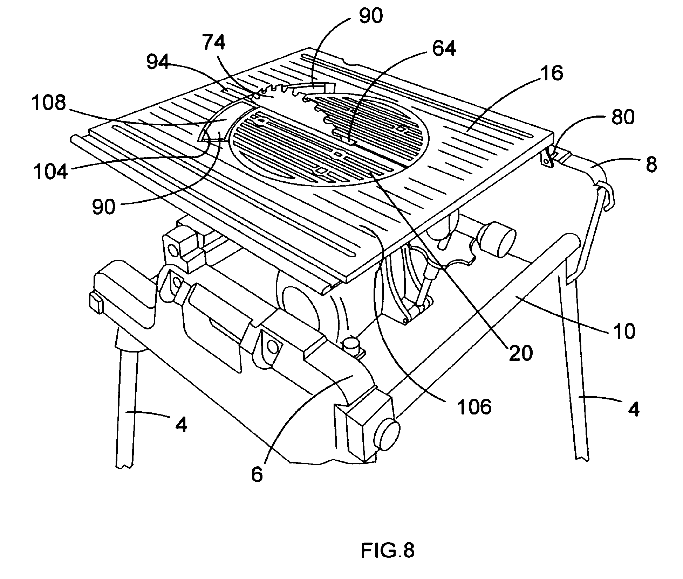

Figure 8 shows the circular table together with its extension located within the square table from the same side as that shown in Figure 7;

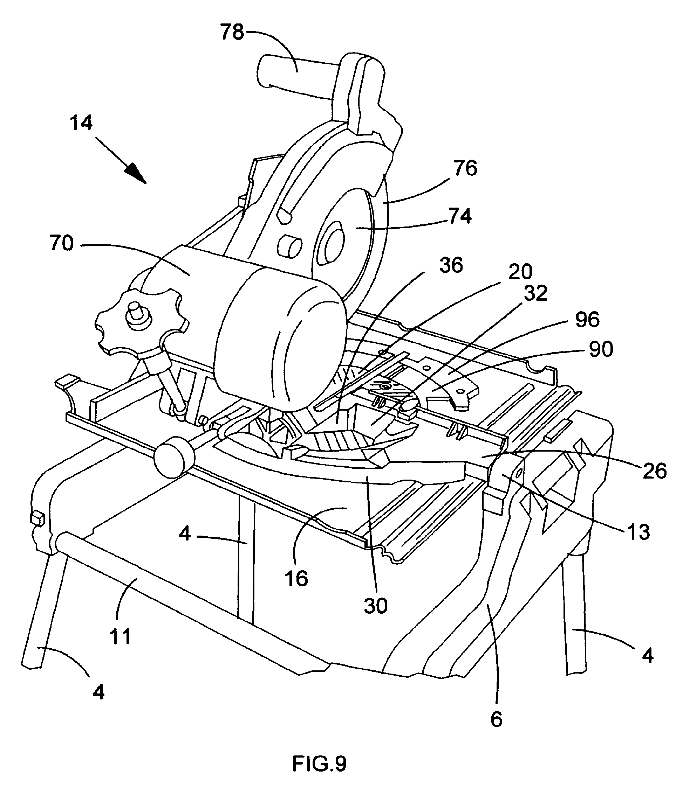

Figure 9 shows a rear perspective view of the flip over saw showing the metal cast;
Figure 10 shows a vertical cross sectional view of the circular table, the square table and the cast in the direction of Arrows A in Figure 6; and
Figure 11 shows a vertical cross sectional view of the circular table, the extension, the plastic insert, the aperture and the square table in the direction of Arrows B in Figure 5.

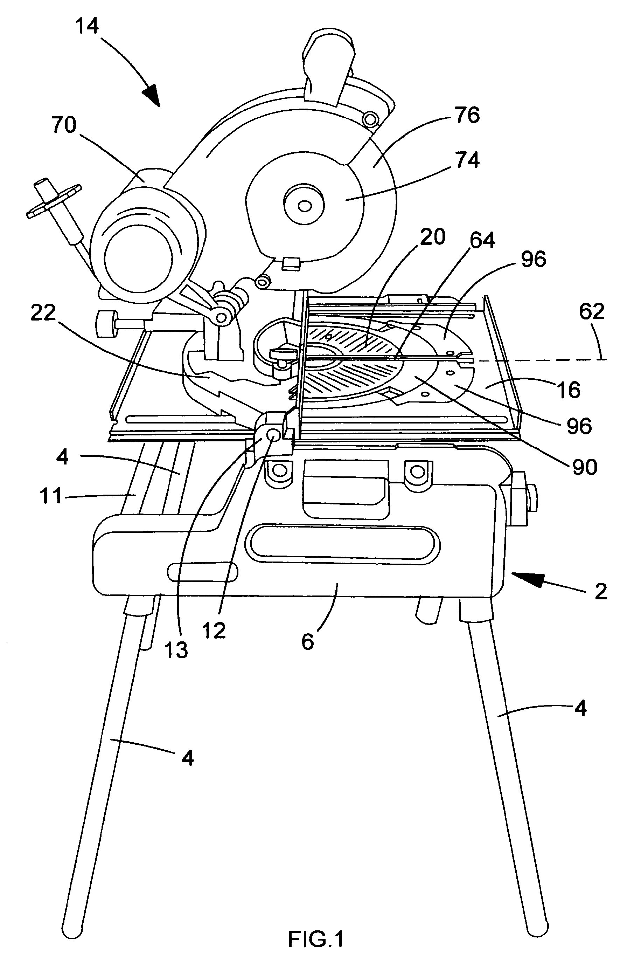

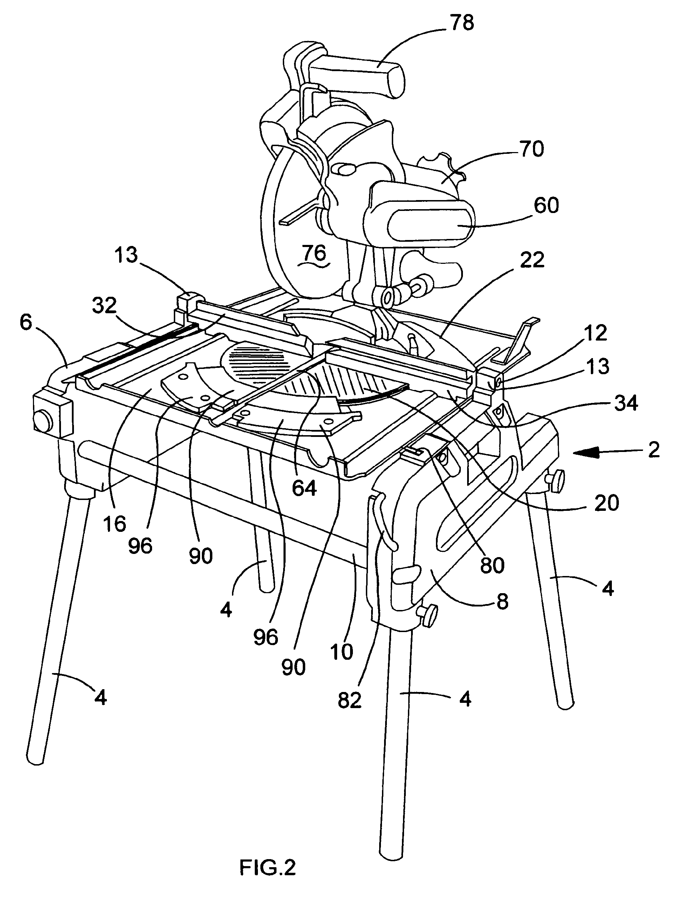

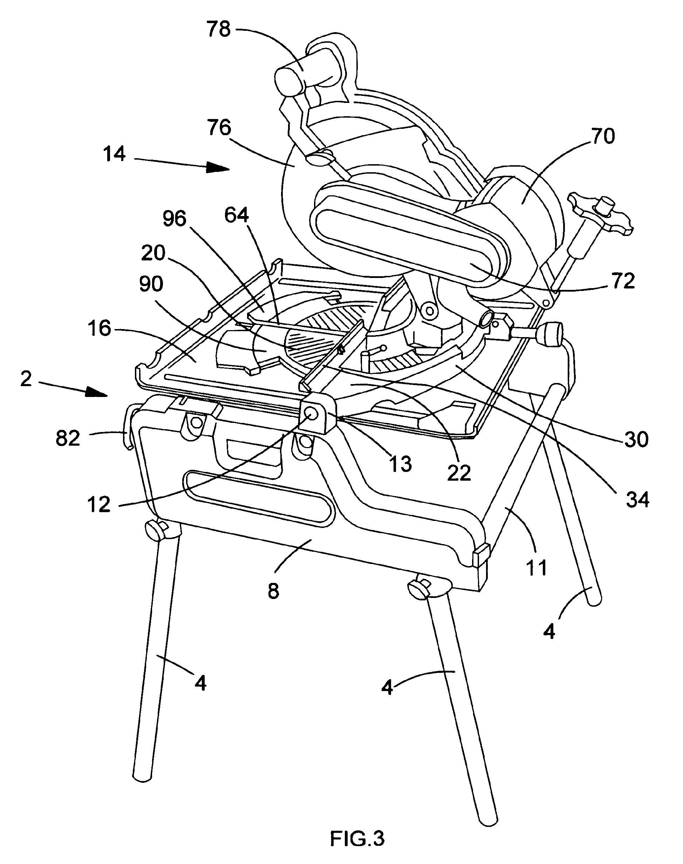

Referring to Figures 1 to 3, the flip over saw comprises a metal frame 2 which is mounted on four legs 4. The frame 2 comprises two side panels 6, 8 which are connected together at the front and rear via bars 10, 11.

Each side panel 6, 8 has an axle support 13 through which is formed a tubular aperture 12. The saw assembly 14 (described in greater detail below) is rotatably mounted on the metal frame 2 via two axles (not shown) which locate within the tubular apertures 12 of the two axle supports 13.

The function of the two axles within the two axle supports 13 is to enable the saw assembly 14 to rotate through 180 degrees as will be described in more detail below.

The saw assembly 14 comprises a thin square metal table 16 made from a sheet of metal, such as steel. A large round aperture 18 is formed through the square table 16 in which is located a circular rotatable table 20.

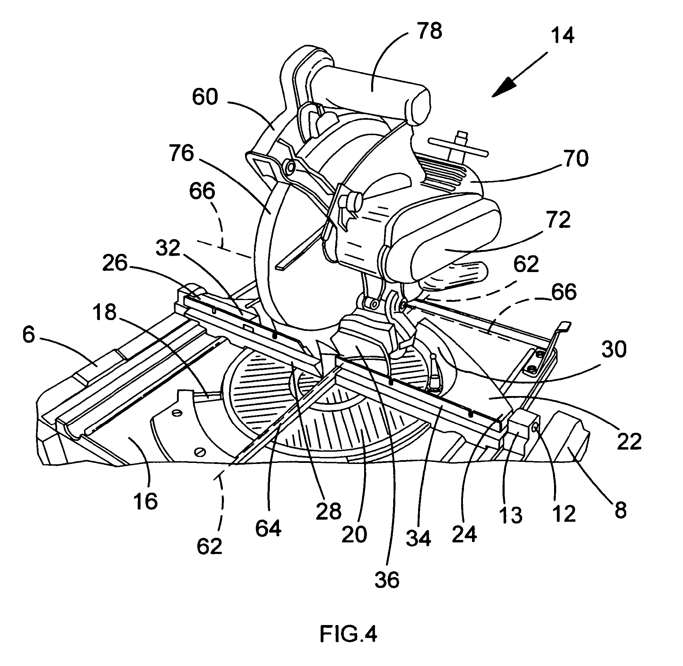

Referring to Figure 4, a metal cast 22 is rigidly attached to the square table 16. The metal cast 22 extends across the full width of the square table 16. Integrally formed on the ends 24, 26 of the metal cast 22 are the axles which locate in the tubular apertures 12 of the axle supports 13 formed through the side panels 6, 8.

The metal cast 22 comprises a middle section 28 which traverses the square table 16 and which interconnects the two ends 24, 26. Furthermore, the metal cast 22 comprises a large semicircular curved section 30 which connects to the side of the middle section 28.

The middle section 28 comprises two straight sections 32, 34 connected together by a small semicircular section 36. The sides of the straight sections 32, 34 of the middle section 28 are vertical and flat and form fences against which a work piece can be placed in order to the cut in well known manner.

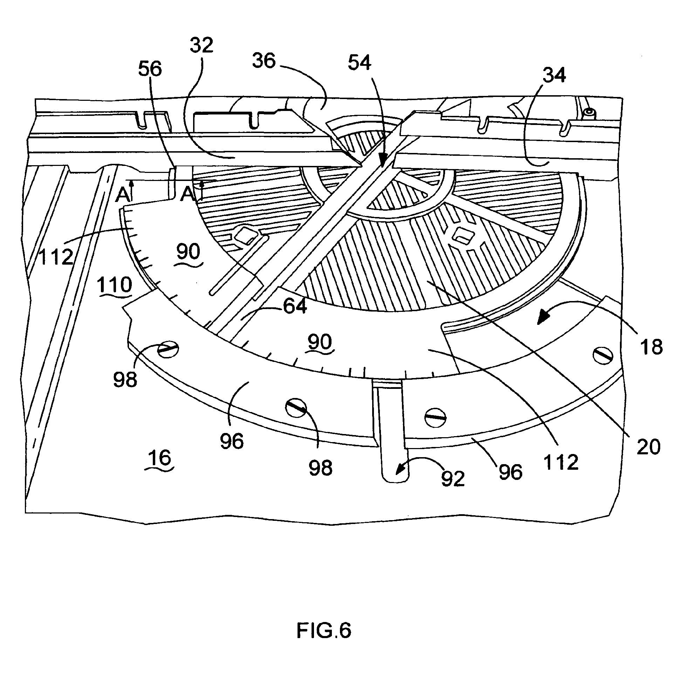

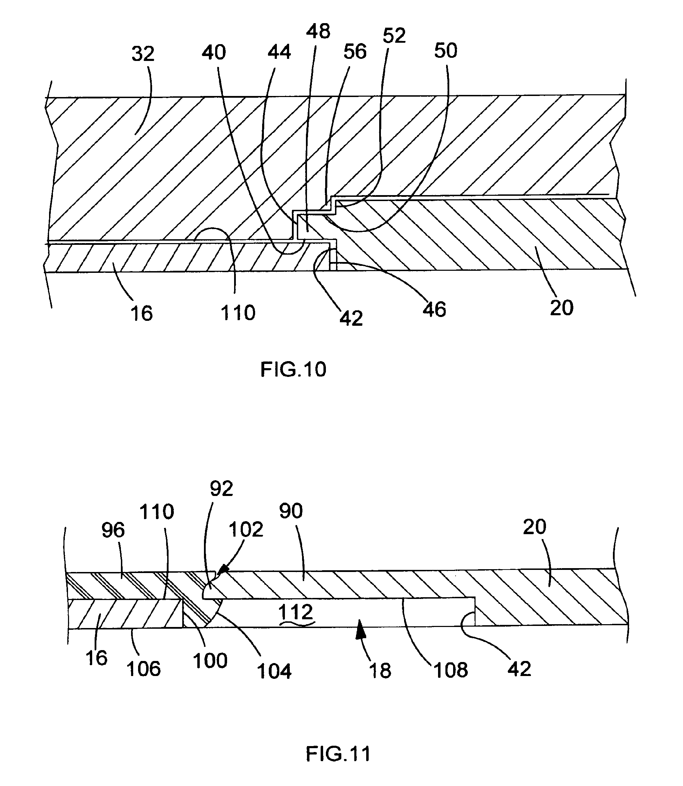

Figure 10 shows a cross-sectional view of the edge of the circular rotatable table 20, the edge 46 of the large round aperture 18 formed in square table 16 and part 32 of the cast 22, in the direction of arrows A in Figure 6.

The circular table 20 is held within the large aperture 18 by the metal cast 22. The circular table 20 is sandwiched between the metal cast 22 and the square table 16. The metal cast 22, which is rigidly connected to the square table 16, prevents the circular table 20 from leaving the aperture 18 i.e. it holds it down in the aperture 18. A lip 48 prevents it from passing through the aperture 18. However, the circular table 20 can freely rotate about its central axis within the aperture 18.

The middle section 28 of the metal cast 22 traverses the circular table 20, holding it in place it within the aperture 18. The small semicircular section 36 surrounds a centre point 54 of the circular table 20.

The diameter of the circular table 20 is greater than the diameter of the round aperture 18 formed through the square table 16. As can be seen in Figure 10, formed around the lower edge of the periphery of the circular table 20 is a recess having a top surface 40 and a side surface 42. The side surface 42 is parallel to the surface 44 at the outer periphery of the circular table 20. The diameter of the circular table 20 at the side surface 42 is slightly less than that of the diameter of the aperture 18 formed through the square table 16. This enables the circular table 20 to be placed on top of the square table 16, its axis being in alignment with that of the large aperture 18, so that the edge 46 of the aperture 18 locates within the recess adjacent the surface 42. As such, the circular table 20 is located within the aperture 18 formed through the square table 16. However, the circular table 20 is prevented from passing through the aperture 18 by the lip 48 formed by recess.

Formed around the upper edge of the periphery of the circular table 20 is a second recess having a bottom surface 50 and the side surface 52. The side surface 52 is parallel to the surface 44 at the outer periphery of the circular table 20. Formed in the metal cast 22 is a step 56 which, when the cast 22 is holding the circular table 20 down, locates in the second recess.

In order to more firmly secure the circular table 20 down within the aperture 18, the large semicircular curved section 30 of the cast 22 follows around and encloses the periphery of the rear of the circular table 20 to sandwich the rear of the circular table 20 against the edge of the aperture 18 as can be seen in Figure 4.

The circular table 20 comprises a slot 64 which passes through the full width of the circular table 20 and which extends from the centre 54 of the circular table 20, radially outwards to the periphery of the circular table 20. The slot 64 extends through the full depth of the circular table 20 so that it is open to and visible on both the top and bottom sides of the circular table 20.

Pivotally mounted on one side of the circular table 20, in a peripheral region of the circular table 20, is a saw unit 60. The saw unit 60 can pivot about two axes, a first axis 62 which is located within the plane of the top surface of the circular table 20 and extends along the slot 64, and a second axis 66 which also extends in a plane parallel to the plane of the top surface of the circular table 20 but which is perpendicular to the direction of the first axis 62. Pivotal movement about the first axis 62 allows the saw unit 60 to perform bevel cuts; pivotal movement about the second axis 66 allows the saw unit to perform chop cuts. Rotation of the circular table 20 about an axis which passes through the centre 54 of the circular table 20, perpendicular to the plane of the circular table 20, relative to the square table 16 and the metal cast 22 allows the saw unit 60 to perform mitre cuts.

The mechanism by which the saw unit 60 is capable of pivoting relative to the circular table is well know in the art and therefore no further description is provided.

The saw unit 60 comprises a motor housing 70 in which is located an electric motor (not shown) and a blade support structure 72 in which is rotably mounted a spindle (not shown). A circular saw blade 74 is rigidly mounted onto the spindle. The motor rotationally drives the spindle by a belt drive system (not shown), which in turn rotationally drives the circular saw blade 74. A guard mechanism 76 surrounds the periphery of the cutting blade 74. A handle 78 is mounted on the blade support structure by which an operator can manipulate the position of the saw relative to the two tables 16, 20.

The design of such a motor unit, handle and guard mechanism, are well known, and they does not form part of the present invention. Therefore, no further description is provided in relation to these features.

The saw assembly 14 is capable of rotating through 180 degrees between two positions, due to the square metal table 16 being pivotally mounted via the metal cast 22 and the integral axles onto the two side panels 6, 8. In the first position, the square metal table 16 is horizontal and the saw unit 60 is located above the square table 16. A locking mechanism 80 locks the position of the square metal table 16 into its first position and prevents it from pivoting relative to the two side panels 6, 8. In the second position, the square metal table is again horizontal, but upside down when compared to its first position. This results in the saw unit 60 being located below the square table 16. Again, the locking mechanism 80 locks position of square metal table 16 into the second position and prevents it from pivoting relative to the two side panels 6, 8. When the saw assembly 14 is in its first position, the flip over saw is capable of being used as a chop saw. When the saw assembly 14 is in its second position, the flip over saw is intended to be used as a table saw.

In order to rotate the saw assembly 14 between its two positions, the locking mechanism 80 is released by a handle 82 on a side panel 8, and is then pivoted to the other position. The design of such a locking mechanism is well known and, as it does not form part of the present invention, no further description is provided in relation to its construction.

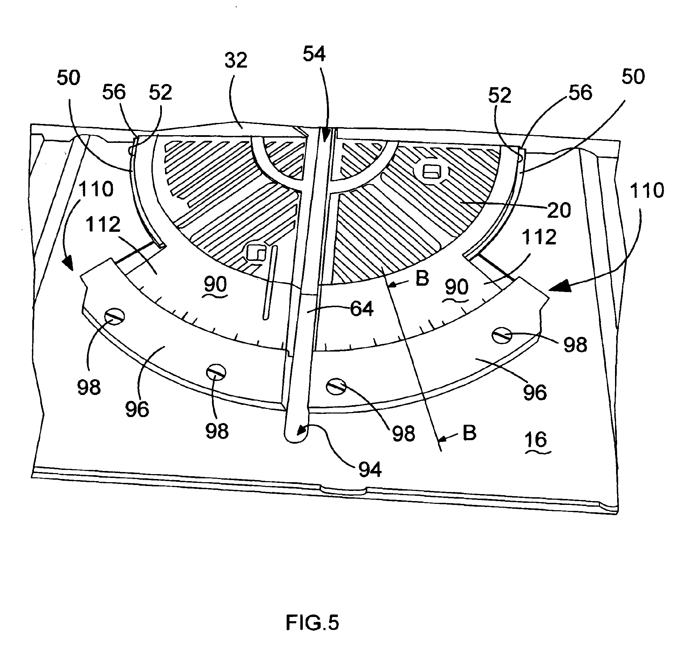

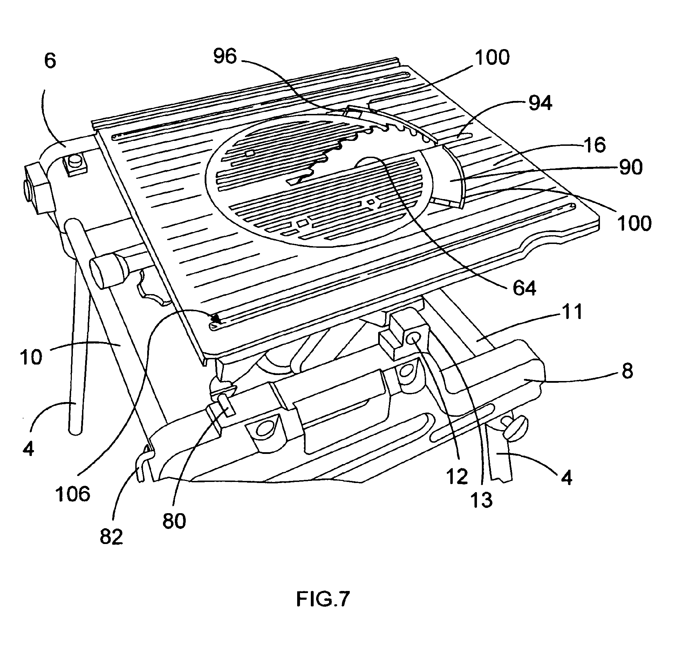

Integrally formed with the circular table 20 is an extension 90 which extends from the periphery of the circular table 20, in the plane of the circular table 20, radially outwardly from the axis of rotation of the circular table 20. The slot 64 formed through the circular table 20 extends across the extension 90 to the radially outer periphery 92 of the extension 90, the slot 64 extending through the full thickness of the extension 90 so that it is open to and exposed on both the top and bottom of the extension 90. A second slot 94 is formed through the square table 16 which is capable of aligning with the slot 64 which crosses the circular table 20 and extension 90 as seen in Figures 5 and 7.

The circular table 20, together with the extension are capable of pivoting through a range of angular movements about the central axis of the circular table 20 relative to the square table 16. The size and shape of the aperture 18 has been arranged so that the slot 64, which passes through both the circular table 20 and extension 90, is open to and visible from both sides of the square table 16, through the full angular range of movement of the circular table 20 and extension 90.

Two plastic inserts 96 are rigidly attached to the upper side 110 of square table 16 using screws 98. The two inserts 96 engage with the outer edge 92 of the extension 90 to provide support to extension 16 and circular table 20 whilst allowing the extension 90 to rotate relative to the square table 16 (see Figure 11).

Figure 11 shows a cross section of the extension 90 in the direction of Arrows B in Figure 5. The edge 100 of the square table 16 which forms the side of the aperture 18, in the region of the extension 90, has been positioned so that the it is approximately aligned, in the radial direction, with the outer periphery 92 of the extension 90 (the extended area of the aperture 18 is referred to as the extended aperture). This enables the extension 90, or at least the part containing the slot 64, to be visible from either side of the square table 16. The width of the extended aperture is such that the slot 64 formed through the extension is visible at all angular positions of the extension 90 and circular table 20. However, it is not necessary for the whole of the extension 90 to be visible, so long as the slot 64 remains exposed.

The plastic inserts 96 comprise a groove 102 in which the outer edge 98 of the extension 90 locates. The sides of the groove 102 locate on the top and bottom of the outer edge 92, providing support for the edge 92, and hence the extension 90 and circular table 20. However, the shape of the groove 102 is such that it allows the edge 92 of the extension 90 to slide along the length of groove 102, allowing the extension 90 and the circular table 20 to rotate.

The underside 108 of the extension 90 is located above the upper side 110 of the square table 16. This enables the side regions 112 of the extension 90 to slide over the top surface 110 of the square table 16 when the extension 90 and circular table 20 are rotated, as seen in Figure 6 compared to Figure 5.

The plastic inserts 96 are moulded in such a manner to provide ramp 104 on the underside 106 of the square table 16. This is to assist the sliding of a workpiece on the underside of the circular table 20 onto the underside 106 of the square table 16 over the recess 112 formed by the underside 108 of the extension 90 when the saw is being used as a table saw.

## Claims

1. A flip over saw comprising a frame (2);
a support table (16) mounted on the frame (2);
a substantially round table (20) rotatably mounted within an aperture (18) formed through the support table (16) such that the round table (20) is exposed on both the top side and underside of the support table (16);
a saw unit (60) pivotally mounted on one side of the round table (20), in a peripheral region, and which can pivot between two positions in order to perform chop cuts, a first upper position located away from the round table (20) and a second lower position located adjacent the round table (20);
a radial slot (64) formed through the substantially round table (20) and which extends from at least the centre (54) of the round table (20) to the edge of the round table (20) and through which an edge of a saw blade (74) can pass when the saw unit (60) is located in its second position;
a forward extension (90) which extends radially outwardly from the periphery of the round table (20), the radial slot (64) extending from the round table (20) across the extension (90);
the round table (20) and extension (90) being capable of rotating through a range of angular positions relative to the support table (16);
wherein the support table (16) is capable of pivoting relative to the frame (2) between two positions, a first position where the saw can be used to perform chopping functions and a second position where the saw can act as a table saw, and wherein the aperture (18) within the support table has been shaped in the region of the extension (90) so that the radial slot (64) through the round table (20) and extension (90) is exposed on both sides of the support table (16) through the full range of angular positions; **characterised in that** the radial slot (64) extends from the round table (20) across the extension (90) to the radially outer edge (92) of the extension (90).

2. A flip over saw as claimed in claim 1 wherein the round table (20) and extension (90) are both being completely surrounded by the support table (16).

3. A flip over saw as claimed in claim 1 or 2 wherein at least part of the periphery of the round table (20) engages with at least a part of the edge (46) of the aperture (18) to rotatably support the round table (20) within the aperture (18).

4. A flip over saw as claimed in any one of the previous claims wherein the side regions (110) of the extension (90) are capable of overlapping the support table (16) in certain angular positions.

## Patentansprüche

1. Tischkreissäge, umfassend einen Rahmen (2),
einen Auflagetisch (16), der an dem Rahmen (2) angebracht ist,
einen im Wesentlichen runden Tisch (20), der drehbar in einer Öffnung (18) angebracht ist, die durch den Auflagetisch (16) hindurch gebildet ist, sodass der runde Tisch (20) sowohl auf der Oberseite als auch auf der Unterseite des Auflagetisches (16) freiliegt,
eine Sägeeinheit (60), die schwenkbar an einer Seite des runden Tisches (20) in einem Bereich des Umfangs angebracht ist und die zwischen zwei Positionen schwenkbar ist, um Kappschnitte auszuführen, wobei eine erste, obere Position vom runden Tisch (20) entfernt angeordnet ist und eine zweite, untere Position an den runden Tisch (20) angrenzend angeordnet ist,
einen radialen Schlitz (64), der durch den im Wesentlichen runden Tisch (20) hindurch gebildet ist und sich mindestens vom Mittelpunkt (54) des runden Tisches (20) zum Rand des runden Tisches (20) erstreckt und durch den ein Rand des Sägeblatts (74) dringen kann, wenn die Sägeeinheit (60) in ihrer zweiten Position angeordnet ist,
eine Erweiterung nach vorn (90), die sich vom Umfang des runden Tisches (20) radial nach außen erstreckt, wobei sich der radiale Schlitz (64) von dem runden Tisch (20) über die Erweiterung (90) erstreckt,
wobei der runde Tisch (20) und die Erweiterung (90) über einen Bereich von Winkelpositionen im Verhältnis zum Auflagetisch (16) drehbar sind,
wobei der Auflagetisch (16) im Verhältnis zum Rahmen (2) zwischen zwei Positionen schwenkbar ist, einer ersten Position, in der die Säge zum Ausführen von Kappfunktionen verwendet werden kann, und einer zweiten Position, in der die Säge als Tischsäge dienen kann, und wobei die Öffnung (18) im Auflagetisch im Bereich der Erweiterung (90) derart geformt ist, dass der radiale Schlitz (64) durch den runden Tisch (20) und die Erweiterung (90) hindurch auf beiden Seiten des Auflagetisches (16) über den gesamten Bereich von Winkelpositionen freiliegt, **dadurch gekennzeichnet, dass** sich der radiale Schlitz (64) von dem runden Tisch (20) über die Erweiterung (90) zum radialen Außenrand (92) der Erweiterung (90) erstreckt.

2. Tischkreissäge nach Anspruch 1, wobei der runde Tisch (20) wie auch die Erweiterung (90) vollständig von dem Auflagetisch (16) umgeben sind.

3. Tischkreissäge nach Anspruch 1 oder 2, wobei mindestens ein Teil des Umfangs des runden Tisches (20) in mindestens einen Teil des Randes (46) der Öffnung (18) eingreift, um den runden Tisch (20) drehbar in der Öffnung (18) aufliegen zu lassen.

4. Tischkreissäge nach einem der vorhergehenden Ansprüche, wobei die Seitenbereiche (110) der Erweiterung (90) in der Lage sind, in bestimmten Winkelpositionen den Auflagetisch (16) zu überlappen.

## Revendications

1. Scie convertible comprenant :
un cadre (2) ;
une table de support (16) montée sur le cadre (2) ;
un plateau sensiblement rond (20) monté à rotation à l'intérieur d'une ouverture (18) formée à travers la table de support (16) de sorte que le plateau rond (20) soit exposé sur à la fois la face supérieure et la face inférieure de la table de support (16) ;
une unité de sciage (60) montée à pivotement sur un côté du plateau rond (20), dans une région périphérique, et qui peut pivoter entre deux positions pour effectuer des découpes, une première position supérieure située à distance du plateau rond (20) et une seconde position inférieure située adjacente au plateau rond (20) ;
une fente radiale (64) formée à travers le plateau sensiblement rond (20) et qui s'étend depuis au moins le centre (54) du plateau rond (20) au bord du plateau rond (20) et à travers laquelle un bord d'une lame de scie (74) peut passer lorsque l'unité de sciage (60) est disposée dans sa seconde position ;
une extension avant (90) qui s'étend radialement vers l'extérieur depuis la périphérie du plateau rond (20), la fente radiale (64) s'étendant depuis le plateau rond (20) en travers de l'extension (90) ;
le plateau rond (20) et l'extension (90) étant à même de tourner dans une plage de positions angulaires par rapport à la table de support (16) ;
dans laquelle la table de support (16) est à même de pivoter par rapport au cadre (2) entre deux positions, une première position dans laquelle la scie peut être utilisée pour effectuer des fonctions de découpe et une seconde position où la scie peut agir comme une scie de table, et dans laquelle l'ouverture (18) à l'intérieur de la table de support a été conformée dans la région de l'extension (90) de sorte que la fente radiale (64) à travers le plateau rond (20) et l'extension (90) soit exposée sur la deux faces de la table de support (16) sur toute la plage de positions angulaires ; **caractérisée en ce que** la fente radiale (64) s'étend depuis le plateau rond (20) en travers de l'extension (90) jusqu'au bord radialement externe (92) de l'extension (90).

2. Scie convertible selon la revendication 1, dans laquelle le plateau rond (20) et l'extension (90) sont tous deux complètements entourés par la table de support (16).

3. Scie convertible selon la revendication 1 ou la revendication 2, dans laquelle au moins une partie de la périphérie du plateau rond (20) s'engage sur au moins une partie du bord (46) de l'ouverture (18) pour supporter à rotation le plateau rond (20) à l'intérieur de l'ouverture (18).

4. Scie convertible selon l'une quelconque des revendications précédentes, dans laquelle les régions latérales (110) de l'extension (90) sont capables de chevaucher la table de support (16) dans certaines positions angulaires.
